# EUROPEAN PATENT APPLICATION

(11) **EP 2 592 565 A1**
(43) Date of publication of application: **15.05.2013**
(21) Application number: 11803648.2
(22) Date of filing: 06.07.2011
(51) Int. Cl.: G06F 17/22, G06F 13/00, G06F 17/21

(54) **TEXT CONVERSION DEVICE, METHOD OF CONVERTING TEXT, AND RECORDING MEDIUM**

(30) Priority: 06.07.2010 JP 2010153647
(71) Applicant: NEC Corporation, Tokyo 108-8001 (JP)
(72) Inventor: EBARA Kenichi, Tokyo 108-8001 (JP)
(74) Representative: Vossius & Partner
(86) International application number: PCT/JP2011/065523
(87) International publication number: WO 2012/005314

(57) **Abstract**

A text conversion device includes a database that stores information, an inputter (120), a determiner (171), a text extractor (172), a related information extractor (177), and a converter (178). The inputter (120) is configured to input a text. The determiner (171) is configured to determine whether the text inputted by the inputter (120) contains a word specifying the database, and if the determination result indicates that the word is contained, the text extractor (172) extracts the word and a remaining text. The related information extractor (177) extracts information from the database specified by the extracted word with the use of the remaining text without the word as a search key. The convertor (178) converts the text inputted by the inputter (120) into any of the extracted information.

## Description

### Technical Field

The present invention relates to a text conversion device, a text conversion method and a recording medium.

### Background Art

In writing a body of an e-mail, if a user wants to add an address of an e-mail (hereinafter referred to as a mail address) stored in an address book to the mail body, the user conventionally opens the address book to copy a desired mail address, and paste the copied mail address to the body of the e-mail. In this method, since a user himself/herself has to open an address book to copy and paste a mail address, the user has much inconvenience.

To eliminate such inconvenience, an art to convert an inputted text to a mail address is proposed (see Patent Literature 1, for example).

### Prior Art Literature

### Patent Literature

Patent Literature 1: Unexamined Japanese Patent Application Kokai Publication No. 2001-188776

### Disclosure of the Invention

### Problems to be Solved by the Invention

Meanwhile, there is a demand of reducing an input burden on a user by converting an inputted text not only to a mail address stored in an address book but also to information stored in various databases. However, the art disclosed in Patent Literature 1 cannot fulfill such a demand.

The present invention was made in view of the above circumstances, and an objective of the present invention is to provide a text conversion device and a text conversion method that can convert an inputted text to information stored in various databases, and a recording medium.

### Means for Solving the Problems

To achieve the above objective, a text conversion device according to a first aspect of the present invention includes:
a database configured to store information;
an inputter configured to input a text;
a determiner configured to determine whether a text inputted by the inputter contains a word that specifies the database;
a text extractor that extracts the word and a remaining text without the word from the text, if the determiner determines that the text contains the word that specifies the database;
a related information extractor configured to extract information from the database specified by the word extracted by the text extractor with the use of the remaining text as a search key; and
a converter configured to convert the text inputted by the inputter to any of the information extracted by the related information extractor.

A text conversion method according to a second aspect of the present invention is performed by a text conversion device having a database to store information, and includes:
an input step to input a text;
a determination step to determine whether the inputted text contains a word that specifies the database;
an extraction step to extract the word and a remaining text without the word from the text, if it is determined that the text contains the word that specifies the database;
a related information extraction step to extract information from the database specified by the extracted word with the use of the remaining text as a search key; and
a conversion step to convert the inputted text to any of the information extracted in the related information extraction step.

A computer-readable recording medium according to a third aspect of the present invention has stored a program executable by a computer that controls a text conversion device provided with a database to store information, the program causing the computer to perform:
an input procedure to input a text;
a determination procedure to determine whether the inputted text contains a word that specifies the database;
a text extraction procedure to extract the word and a remaining text without the word from the text, if it is determined that the text contains the word that specified the database;
a related information extraction procedure to extract information from the database specified by the extracted word with the use of the remaining text as a search key; and
a conversion procedure to convert the inputted text to any of the information extracted in the related information extraction procedure.

### Effects of the Invention

The present invention can provide a text conversion device and a text conversion method that can convert an inputted text to information stored in various databases, as well as a recording medium.

### Brief Description of Drawings

FIG. 1 is a block diagram illustrating a configuration of a mobile phone including a text conversion device according to a first embodiment of the present invention;
FIG. 2 is a diagram illustrating a configuration of a database to be searched according to the first embodiment;
FIG. 3 is a diagram illustrating a configuration of a user database according to the first embodiment;
FIG. 4 is a diagram illustrating a configuration of a predictive conversion database according to the first embodiment;
FIG. 5 is a diagram for describing an example of a new mail creation screen according to the first embodiment;
FIG. 6 is a diagram for describing an example of a mail body input screen according to the first embodiment;
FIG. 7A is a flow chart illustrating processing to display a conversion candidate performed by the mobile phone according to the first embodiment;
FIG. 7B is a flow chart subsequent to the flow chart illustrated in FIG. 7A;
FIG. 7C is a flow chart subsequent to the flow chart illustrated in FIG. 7B;
FIG. 8A is a diagram for describing an example of predictive conversion;
FIG. 8B is a diagram for describing an example of predictive conversion after a phone number is registered in a predictive conversion database;
FIG. 9 is a block diagram illustrating a configuration of a mobile phone including a text conversion device according to a second embodiment of the present invention;
FIG. 10 is a diagram illustrating a configuration of a content database according to the second embodiment;
FIG. 11 is a flow chart illustrating processing to display a conversion candidate performed by the mobile phone according to the second embodiment;
FIG. 12A is a diagram for describing an example of a mail body input screen displaying a thumbnail;
FIG. 12B is a diagram for describing an example of predictive conversion after a thumbnail is displayed;
FIG. 13 is a diagram illustrating a configuration of a database to be searched according to a third embodiment;
FIG. 14A is a flow chart illustrating processing to display a conversion candidate performed by a mobile phone according to the third embodiment;
FIG. 14B is a flow chart subsequent to the flow chart illustrated in FIG. 14A; and
FIG. 15 is a block diagram illustrating another configuration of a mobile phone including a text conversion device according to the first to third embodiments.

### Mode for Carrying Out the Invention

### (First Embodiment)

Hereinafter, a mobile phone 10 including a text conversion device according to a first embodiment of the present invention will be described with reference to drawings.

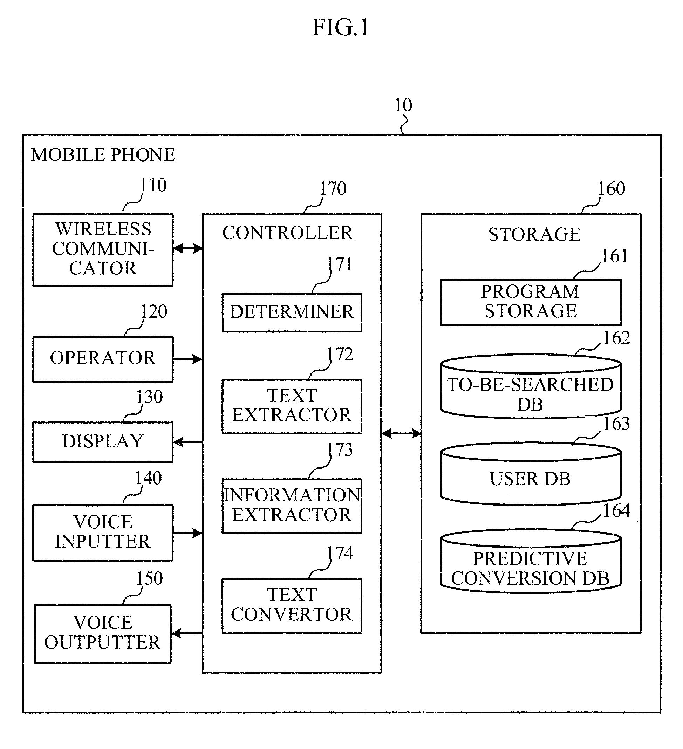

The mobile phone 10 according to the first embodiment includes a wireless communicator 110, an operator 120, a display 130, an voice inputter 140, an voice outputter 150, a storage 160 and a controller 170, as illustrated in FIG. 1.

The wireless communicator 110 is composed of, for example, an antenna, a baseband circuit, a modulation circuit and a demodulation circuit, and demodulates a signal received via the antenna in the demodulation circuit to obtain a baseband circuit signal, and outputs this baseband signal to the controller 170. The wireless communicator 110 also modulates a baseband signal supplied from the controller 170 in the modulation circuit and transmits the modulated signal via the antenna.

The operator 120 is composed of, for example, a cross-hair cursor key, an off-hook button for off-hook, and a dial button to input information such as numbers, letters and the like, and information inputted from the operator 120 according to operation by a user is transmitted as an input signal to the controller 170. The operator 120 can be also replaced with an inputter 120. Hereinafter the operator 120 will be called the inputter 120.

The display 130 is composed of, for example, a liquid crystal display device or the like, and displays various information according to control by the controller 170.

The voice inputter 140 is composed of, for example, a microphone, an analog/digital (A/D) converter and the like. The microphone converts an inputted voice to an analog voice signal, and supplies the converted analog voice signal to the A/D converter. The A/D converter converts the analog voice signal supplied from the microphone to a digital voice signal, and supplies the converted digital voice signal to the controller 170.

The voice outputter 150 is composed of, for example, a digital/analog (D/A) converter, an amplifier, speaker and the like. The D/A converter converts a digital voice signal supplied from the controller 170 to an analog voice signal, and supplies the converted analog voice signal to the amplifier. The amplifier amplifies the analog voice signal supplied from the D/A converter, and supplies the amplified analog voice signal to the speaker. The speaker outputs the analog voice signal supplied from the amplifier as a voice.

The storage 160 is composed of, for example, a semiconductor memory or the like, and includes a program storage 161, a database to be searched (a to-be-searched DB) 162, a user database (a user DB) 163, and a predictive conversion database (a predictive conversion DB) 164 and the like.

The program storage 161 stores a program to be executed by the controller 170.

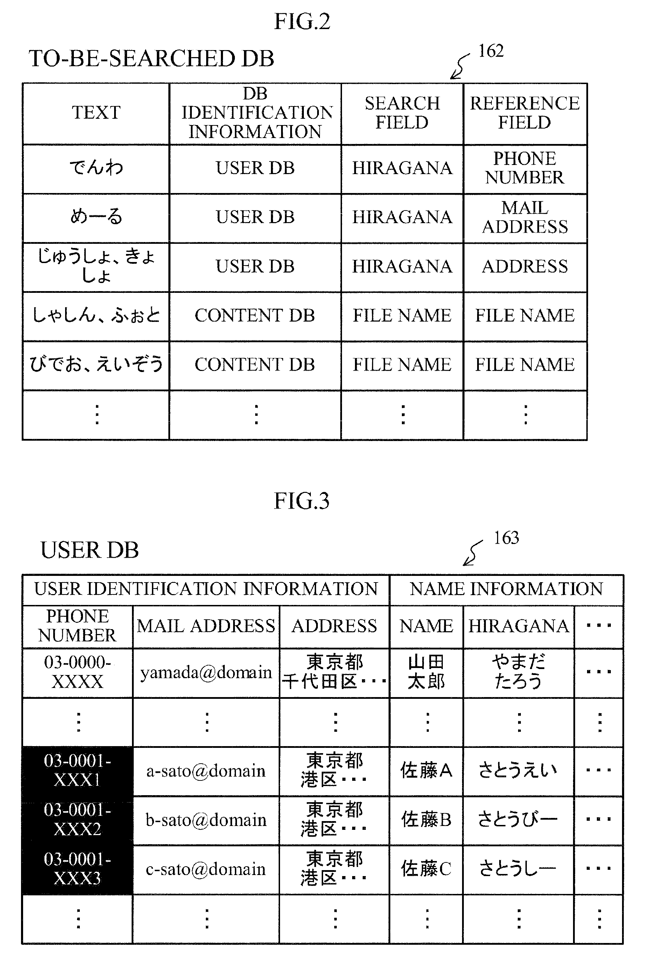

The to-be-searched DB 162 stores a text, DB identification information that identifies a database (DB) to be searched, a search field that indicates a field searched by the controller 170 in the DB to be searched, and a reference field that indicates a field to be referred to in a record found by searching, in association with one another, as illustrated in FIG. 2. Hereinafter, an example where the first embodiment is applied to Japanese will be described.

The column of "text" ("text" field) illustrated in FIG. 2 is an example where texts are written in Japanese *hiragana.* Where respective values in the "text" field of FIG. 2 are called text 1, text 2, text 3 ... from the top of the FIG., they indicate matters shown in Table 1. *Hiragana* is a phonogram composing a Japanese syllable.

**[Table 1]**

| |
|---|
| Text 1 = 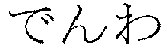 : a word in *hiragana,* that means "telephone" |
| Text 2 = 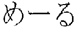 : a word in *hiragafia,* that means "mail" |
| Text 3 = 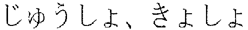 : words in *hiragana,* the both mean "address" |
| Text 4 = 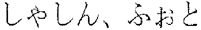 : words in *hiragana,* the both mean "photography", |
| Text 5 = 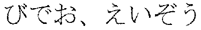 : words in *hiragana,* that mean "video" and "image", respectively |

The user DB 163 stores user identification information that identifies a user, and name information that indicates a user name, in association with each other, as illustrated in FIG. 3.

The user identification information includes information such as a phone number, a mail address, an address and the like. The name information includes information such as a name written in *kanji* and *hiragana* indicating reading of the name. *Kanji* is a Japanese ideogram. Table 2 indicates reading in alphabet of values in "*hiragana*" field of FIG. 3 from the top of the Table as "name 1 in *hiragana*", "name 2 in *hiragana*", "name 3 in *hiragana*" ....

**[Table 2]**

| |
|---|
| Name 1 in *hiragana* = 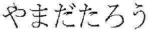 *;* reading "ya.ma.da.ta.ro.u" in alphabet |
| Name 2 in *hiragana* = 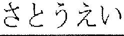 ; reading "sa.to.u.e.i" in alphabet |
| Name 3 in *hiragana* = 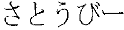 ; reading "sa.to.u.bi" in alphabet |
| Name 4 in *hiragana* = 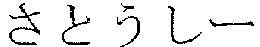 ; reading "sa.to.u.si" in alphabet |

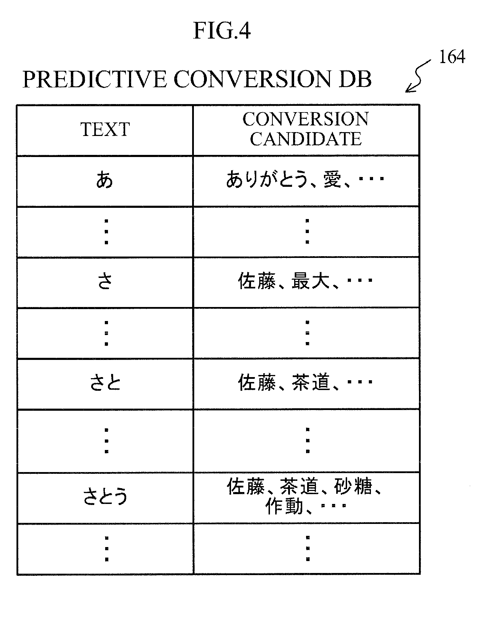

The predictive conversion DB 164 stores a text and a conversion candidate of predictive conversion in association with each other, as illustrated in FIG. 4. Table 3 is a supplementary explanation of FIG. 4. For convenience of later explanation, values of texts of FIG. 4 are called texts a, b and c ... respectively from the top of the FIG; and conversion candidates of the respective texts are called conversion candidates a1, a2, b1, b2 ... respectively. For example, the predictive conversion DB 164 illustrated in FIG. 4 stores conversion candidates d1, d2, d3, d4 ... in Table 3 in association with an inputted *hiragana* text d in Table 3 as conversion candidates thereof. The order of conversion candidates is sorted according to the number of conversion to each of the conversion candidates, or the like. A conversion candidate in FIG. 4 is a character string such as a word or a matter that starts at reading corresponding to a text, but a conversion candidate is not limited to reading. Any conversion candidate associated with a text may be employed.

**[Table 3]**

| |
|---|
| Text a = 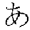 ; *hiragana* |
| conversion candidate a1 = 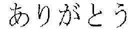 : a word in *hiragana,* that means "thank you"; The first one character is " 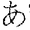 " with the same reading as text a |
| conversion candidate a2 = 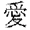 : a word in *kanji* that means "love" and reads " 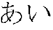 " in *hiragana* |
| Text b = 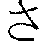 ; *hiragana* |
| conversion candidate b1 = 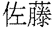 : a last name in *kanji,* reading " 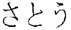 " in *hiragana;* The first one character in reading is " 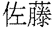 " with the same reading as text b. |
| conversion candidate b2 = 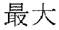 : a word in *kanji* that means "maximum" and reads " 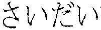 " in *hiragana;* The first one character in reading is " 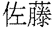 " with the same reading as text b. |
| Text c = 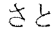 ; *hiragana* |
| conversion candidate c1 = 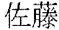 : the same as conversion candidate b1; The first two characters in reading are " 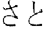 " with the same reading as text c |
| conversion candidate c2 = 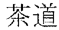 : a word in *kanji* that means "tea ceremony" and reads " 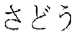 " in *hiragana;* Since " 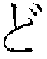 " is a voiced sound of " 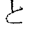 ", the first two characters in reading are deemed to have the same reading as text c. |
| Text d = 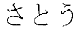 *; hiragana* |
| conversion candidate d1 = 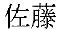 : the same as conversion candidate b1; the same reading as text d |
| conversion candidate d2 = 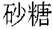 : a word in *kanji* that means "sugar" and reads " 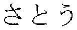 " in *hiragana,* which is the same reading as text d; |
| conversion candidate d3 = 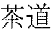 : which is deemed to have the same reading as text d due to the same reason as that of conversion candidate c2. |
| conversion candidate d4 = 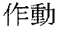 : a word in *kanji* that means "operation" and reads " 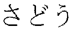 " in *hiragana,* which is deemed to have the same reading as text d due to the same reason as that of conversion candidate c2 |

The controller 170 illustrated in FIG. 1 is composed of, for example, a central processing unit (CPU), a semiconductor memory and the like, and controls each part of the mobile phone 10 according to a program stored in the program storage 161 to realize a function of a general mobile phone.

The controller 170 also includes a determiner 171, a text extractor 172, an information extractor 173 and a text converter 174, as functional components to realize a text conversion function. Details thereof will be described later.

The text conversion device according to the first embodiment includes the input 120, controller 170, and the storage 160 that includes the above various databases.

Next, operation of the mobile phone 10 including the text conversion device according to the first embodiment will be described. The mobile phone 10, like a general mobile phone 10, in response to pressing of a dial button after an off-hook button is pressed, can call and talk to another mobile phone 10 or the like via the wireless communicator 110 and an external base station or the like. The mobile phone 10 also can activate a mailer in response to pressing a button for activating the mailer. Further, the text conversion device of the mobile phone 10 has a predictive conversion function. The predictive conversion function displays, as conversion candidate(s), character string(s) such as a word and a segment starting at reading corresponding to an inputted *kana* character, for example, an inputted *hiragana* character, and a user efficiently performs a Japanese language input with less key operations by selecting a desired word or the like from the conversion candidate(s). A *kana* character is a type of phonogram composing a Japanese syllable, and has two types of characters, *hiragana* and *katakana.*

Hereinafter, for easier understanding, operation of the text conversion device according to the first embodiment will be described using an example where a new mail is created with a mailer, and a phone number of an acquaintance is inserted into the created mail.

### (1) Processing to display a mail body input screen

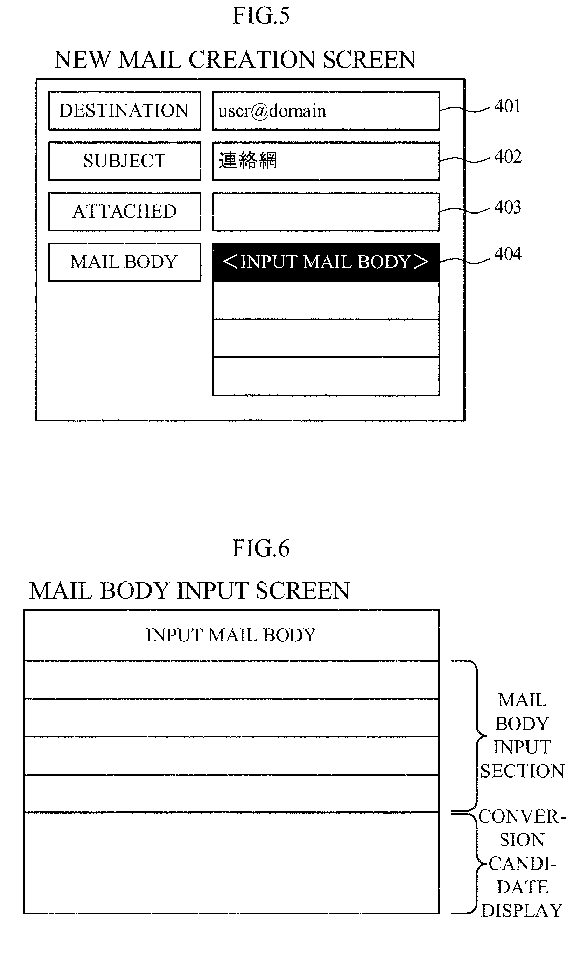

When a user intends to create a new mail, the user operates the inputter 120 to provide an instruction to display a screen for creating a new mail (a new mail creation screen). In response to this instruction, the inputter 120 transmits a signal indicative of the instruction to the controller 170. The controller 170 displays a new mail creation screen illustrated in FIG. 5, in response to this signal.

The new mail creation screen, like that of the general mobile phone 10, includes a text box 401 for inputting a mail address of a destination, a text box 402 for inputting a subject, a text box 403 for specifying an attached file, and a text area 404 for inputting a mail body.

The controller 170 displays a screen for inputting a mail body (a mail body input screen) on the display 130 as illustrated in FIG. 6, in response to selecting the text area 404 for inputting a mail body in the new mail creation screen and pressing a button for confirming selection (an enter button). The mail body input screen, like that of a general mobile phone 10, includes a mail body input section for inputting a mail body and a conversion candidate display for displaying a conversion candidate of predictive conversion.

### (2) Processing to display a conversion candidate

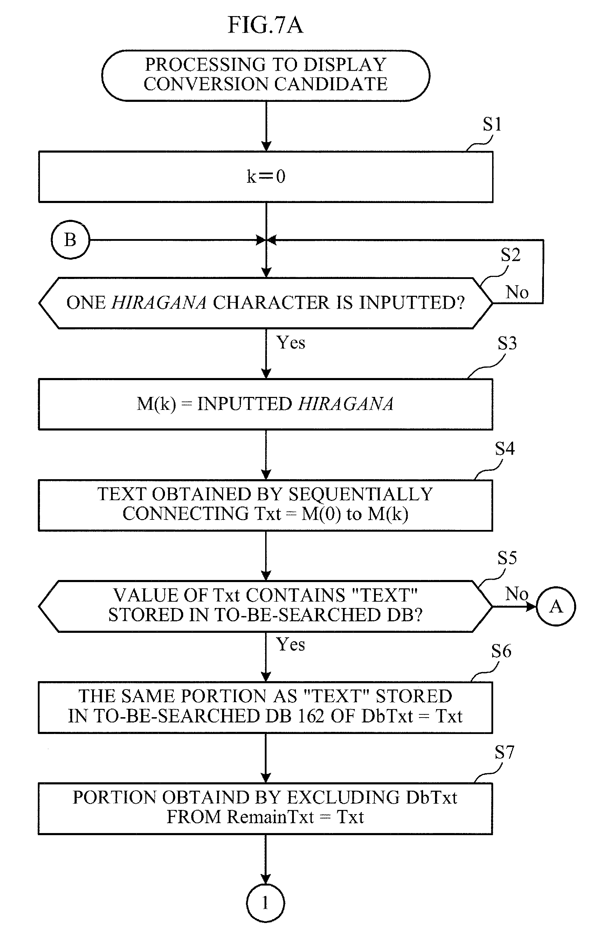

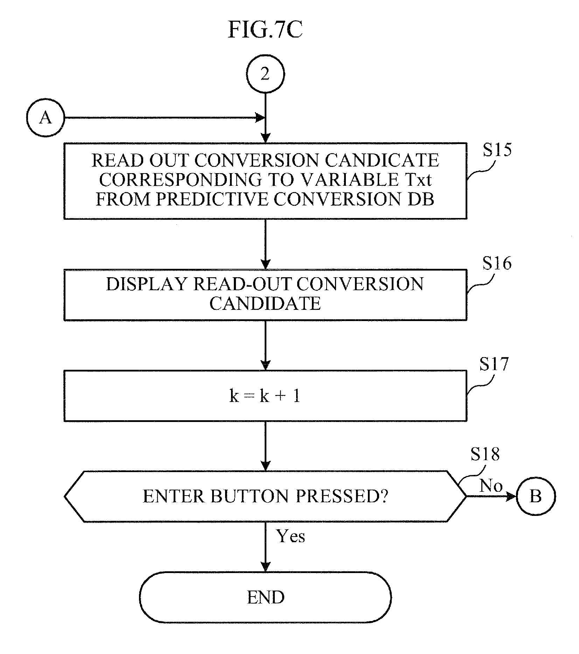

After the mail body input screen is displayed in this way, the controller 170 performs processing to display a conversion candidate of a text inputted by the inputter 120. The processing will be described with reference to FIGS. 7A to 7C.

Hereinafter, for easier understanding, processing of the controller 170 to display a conversion candidate of a text inputted by the input 120 where *hiragana* characters 1 to 6 in Table 4 are sequentially inputted by the input 120 will be described. This text is inputted by a user so as to display a phone number of Mr. Sato who is the user's acquaintance, for example. The predictive conversion DB 164 stores data as illustrated in FIG. 4.

**[Table 4]**

| |
|---|
| *hiragana* character 1 = 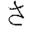 |
| *hiragana* character 2 = 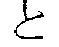 |
| *hiragana* character 3 = 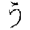 |
| *hiragana* character 4 = 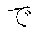 |
| *hiragana* character 5 = 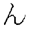 |
| *hiragana* character 6 = 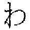 |

The controller 170, in response to displaying the mail body input screen, starts processing to display a conversion candidate illustrated in FIGS. 7A to 7C. First, the controller 170 resets a value of an index k to 0 (Step S1). The controller 170 determines whether one *hiragana* character has been inputted by the input 120 (Step S2). If one *hiragana* character is not inputted (Step S2; No), the controller 170 returns processing to Step S2.

Meanwhile, if one *hiragana* character has been inputted (Step S2; Yes), the controller 170 stores the inputted one *hiragana* character in array M(k) (Step S3).

The controller 170 stores the inputted one *hiragana* character in array M(k), for example, M(0) *= hiragana* character 1, M(1) *= hiragana* character 2, M(2) *= hiragana* character 3,....

The controller 170 stores a text obtained by sequentially connecting arrays M(0) to M(k) in a variable Txt (Step S4).

For example, if values are stored in array M(k) (k = 0, 1, 2), like M(0) *= hiragana* character 1, M(1) *= hiragana* character 2, M(2) *= hiragana* character 3, the controller 170 stores values in a variable Txt as shown in Table 5.

**[Table 5]**

| |
|---|
| Txt = 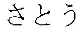 |

The determiner 171 in the controller 170 determines whether values of the variable Txt contain any of values stored in "text" field stored in the to-be-searched DB 162 (Step S5). If the determiner 171 determines that the variable Txt does not contain any of the values stored in "text" field stored in the to-be-searched DB 162 (Step S5; No), the controller 170 advances processing to Step S 15.

Meanwhile, if the determiner 171 determines that the variable Txt contains any of the values in "text" field stored in the to-be-searched DB 162 (Step S5; Yes), the text extractor 172 in the controller 170 stores, in a variable DbTxt, the same portion contained in the value of the variable Txt as a value in "text" field stored in the to-be-searched DB 162 in a variable DbTxt (Step S6).

For example, if the variable Txt is a value shown in Table 6, the text extractor 172 stores, in a variable DbTxt, as shown in Table 7, the same portion contained in the value of the variable Txt as a value of text 1, shown in Table 1, in "text" field stored in the to-be-searched DB 162 (see FIG. 2).

**[Table 6]**

| |
|---|
| Txt = 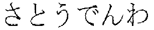 |

**[Table 7]**

| |
|---|
| DbTxt = 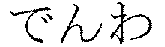 |

The text extractor 172 stores, in a variable RemainTxt, a portion other than a value of the variable DbTxt contained in the value of the variable Txt (Step S7).

For example, if the variable Txt is a value shown in Table 6, the text extractor 172 stores, in the variable RemainTxt, a portion obtained by excluding a value of the variable DbTxt shown in Table 7 from the value of the variable Txt shown in Table 6, as shown in Table 8.

**[Table 8]**

| |
|---|
| RemainTxt = 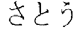 |

The controller 170 determines whether a length (the number of bytes) of a character string stored in the variable RemainTxt is 0 (Step S8). If it is determined that a length (the number of bytes) of the character string stored in the variable RemainTxt I is 0 (Step S8; Yes), the controller 170 advances processing to Step S15.

If it is determined that a length (the number of bytes) of the character string stored in the variable RemainTxt I is not 0 (Step S8; No), the controller 170 reads out, from the to-be-searched DB 162, a value in the DB identification information, a value in the search field and a value in the reference field that correspond to the same value in the "text" field as a value of the variable DbTxt (Step S9).

For example, if the variable DbTxt is a value shown in Table 7, the controller 170 reads out, from the to-be-searched DB 162 illustrated in FIG. 2, a value in the DB identification information, "user DB", a value in the search field, *"hiragana"* and a value in the reference field, "phone number" that are associated with a value of text 1 in Table 1 in the "text" field. In the first embodiment, a case where the read-out value in the DB identification information is "user DB" will be described. A case where the read-out value in the DB identification information is "content DB" will be described in a second embodiment.

The information extractor 173 in the controller 170 searches a DB attached with the read-out DB identification information in such a way that a field having the same name as the read-out search field value is searched for a record whose value contains a value of the variable RemainTxt (Step S10).

Here, the read-out DB identification information is "user DB", and the search field is *"hiragana"* field, as illustrated in FIG. 2. The information extractor 173 in the controller 170 searches "hiragana" field in the user DB 163 in FIG. 3 for a record whose value contains a value of the variable RemainTxt in Table 8.

Then, the information extractor 173 determines whether a record fulfilling such a search criterion has been found (Step S11). If the information extractor 173 determines that a record fulfilling such a search criterion is not found (Step S11; No), the controller 170 advances processing to Step S15.

Meanwhile, if the information extractor 173 determines that a record fulfilling the search criterion has been found (Step S11; Yes), the information extractor 173 extracts, from the record fulfilling the search criterion, a value in a field having the same name as the read-out reference field value in the user DB 163 (Step S12).

For example, the information extractor 173 extracts, from three records whose value in *"hiragana"* field contains a value of the variable RemainTxt in Table 8, as illustrated using highlighting in FIG. 3, "03-0001-XXX1", "03-0001-XXX2" and "03-0001-XXX3" that are values in "phone number" field having the same name as the read-out reference field value, "phone number", in the user DB 163 in FIG. 3.

The text converter 174 of the controller 170 determines whether the predictive conversion DB 164 stores a record whose value of "text" field is a value of the variable Txt or a value of the variable RemainTxt, and whose value of "conversion candidate" field is a value extracted by the information extractor 173 (Step S 13). If the text converter 174 determines that the predictive conversion DB 164 stores such a record (Step S 13; Yes), processing proceeds to Step S15.

Meanwhile, if the text converter 174 determines that the predictive conversion DB 164 does not store such a record (Step S 13; No), the text converter 174 stores, in the predictive conversion DB 164, the record that is determined not to be stored (Step S 14). This permits storing, in the predictive conversion DB 164, a value of the variable Txt and a value of the variable RemainTxt, and a value extracted by the information extractor 173 respectively in association with each other.

For example, if the variable Txt is a value shown in Table 6, the text converter 174 stores a record whose value in "text" field is a value in Table 6 and whose value in "conversion candidate" field is "03-0001-XXX1", "03-0001-XXX2" and "03-0001-XXX3" in the predictive conversion DB 164.

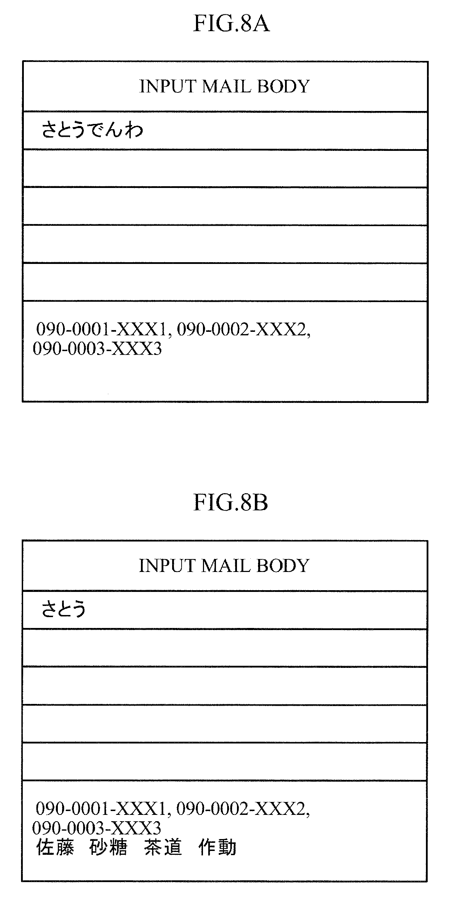

The text converter 174 reads out a conversion candidate corresponding to a value of the variable Txt from the predictive conversion DB 164 (Step S 15). The text converter 174 displays read-out conversion candidate(s) in a lower section of the mail body input screen (a conversion candidate display), as illustrated in FIG. 8A (Step S16). If the predictive conversion DB 164 is made to store a record whose value in "text" field is a value of the variable Txt, and whose value in "conversion candidate" field is a value extracted by the information extractor 173, a conversion candidate read out from the predictive conversion DB 164 indicates a value, in the record, extracted by the information extractor 173.

Next, the controller 170 increments a value of an index k (Step S17). Next, the text converter 174 determines whether the enter button has been pressed (Step S 18). If the text converter 174 determines that the enter button is not pressed (Step S 18; No), processing returns to Step S2. Meanwhile, if the text converter 174 determines that the enter button has been pressed (Step S 18; Yes), processing will be terminated after performing the following processing to convert a text.

After the above processing is terminated, if a value shown in Table 9 is inputted as a variable Txt in the mail body input screen by the inputter 120, the text converter 174 displays read-out conversion candidates shown in Table 10 in the conversion candidate display, as illustrated in FIG. 8B, on the basis of a general predictive conversion function.

**[Table 9]**

| |
|---|
| Txt = 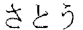 |

**[Table 10]**

| |
|---|
| 03-0001- X X X 1, 03-0001- X X X 2, 03-0001- X X X 3, 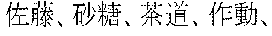 •••••• |

### (3) Processing to confirm a text

After conversion candidate(s) is/are displayed on the conversion candidate display in this way, the text converter 174 performs processing to convert a text inputted by the inputter 120 (for example, a *hiragana* text) to a user's desired text and confirm the text. The processing will be described.

If one conversion candidate is selected by the inputter 120 from the conversion candidate(s) displayed on the conversion candidate display and the enter button of the inputter 120 is pressed, the text converter 174, in response to this, converts the inputted text *(hiragana)* to the selected conversion candidate and confirms the conversion candidate as a user's desired text.

Meanwhile, if the enter button is pressed without selecting one conversion candidate by the inputter 120 of the conversion candidate(s) displayed on the conversion candidate display, the text converter 174, in response to this, confirms an inputted text (for example, a *hiragana* text) as it is as a user's desired text without being converted.
The confirmed text is inserted into, for example, a cursor position in a mail body.

As described above, according to the first embodiment, if an inputted text contains a word specifying the user DB 163, the controller 170 extracts a remaining text excluding this word from the inputted text via the determiner 171 and text extractor 172. Then, the controller 170 extracts a phone number from the user DB 163 specified by this word via the information extractor 173 and text converter 174 with the use of the extracted remaining text as a search key, and stores the extracted phone number as a conversion candidate of the remaining text in the predictive conversion DB 164. This allows for an efficient and easy input of a phone number stored in various user DB 163 by a predictive conversion function with less key operations than a conventional method. That is, an inputted text can be converted to a user's desired phone number.

In the first embodiment, the example has been described in which a *hiragana* text shown in Table 6 is inputted as a variable Txt by the inputter 120; and if "name infomation" field includes a value of name information that contains a value in Table 11, the controller 170 extracts a phone number corresponding thereto from the user DB 163, has the predictive conversion DB 164 store the phone number, and simply and easily converts the inputted text to phone number information.

**[Table 11]**

| |
|---|
| 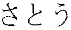 |

As another example, a case in which a *hiragana* text shown in Table 12 is inputted as a variable Txt by the inputter 120 will be described. The controller 170, like the above, determines whether a text in Table 12 contains any of values in "text" field stored in the to-be-searched DB 162 in FIG. 2. In this example, a value indicated as text 2 in Table 1 is contained, and according to the to-be-searched DB 162, data identification information and a search field that correspond to this text 2 are "user DB" and "*hiragana*", respectively. Accordingly, the *"hiragana"* search field in the user DB 163 illustrated in FIG. 3 is searched for a value shown in Table 11 obtained by excluding a value indicated as text 2 in Table 1 from the text in Table 12. Since the *"hiragana"* search field is in the name information column in the user DB 163, a mail address whose "hiragana" field in name information contains a value shown in Table 11 is extracted from the user DB 163, stored in the predictive conversion DB 164 as needed, thereby allowing for easy and simple conversion of an inputted text to mail address information.

**[Table 12]**

| |
|---|
| Txt = 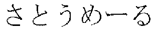 ; Notes) " 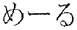 " means "mail" |

If a text shown in Table 13 is inputted as a variable Txt by the inputter 120, the controller 170 similarly extracts an address whose name information contains a value shown in Table 11 from the user DB 163 and has the predictive conversion DB 164 store the extracted address as needed, thereby allowing for easy and simple conversion of an inputted text to address information.

**[Table 13]**

| |
|---|
| " 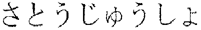 "; Notes) " 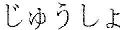 " means "address" |

In the first embodiment, the to-be-searched DB 162 stores a plurality of *hiragana* synonyms as values in "text" field as illustrated in FIG. 2. Therefore, for example, in both of the case where a text in Table 13 is inputted and the case where a text in Table 14 is inputted, the controller 170 not only can extract the same conversion candidate from the user DB 163 and have the predictive conversion DB 164 store the extracted conversion candidate, but also can easily and simply convert the inputted text to address information in both of the cases.

**[Table 14]**

| |
|---|
| " 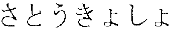 "; Notes) " 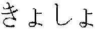 " means "address" |

The text conversion device according to the first embodiment does not need to use a dedicated device, but can be realized by installing a program and data for having a common computer perform the above respective processings and execute the program on the operating system (OS). The program and data can be installed into the computer in such a way that the program and data are recorded on a computer-readable recording medium (such as CD-ROM) and installed via this recording medium, or can be inputted and performed via a communication line or the like.

As described above, the first embodiment can provide a data conversion device, a data conversion method and a program that can easily and simply convert an inputted text to various information stored in a database.

### (Second Embodiment)

If a user intends to attach a desired content to a mail body in the mobile phone 10, the user searches for this content and attaches the found content to the mail text.

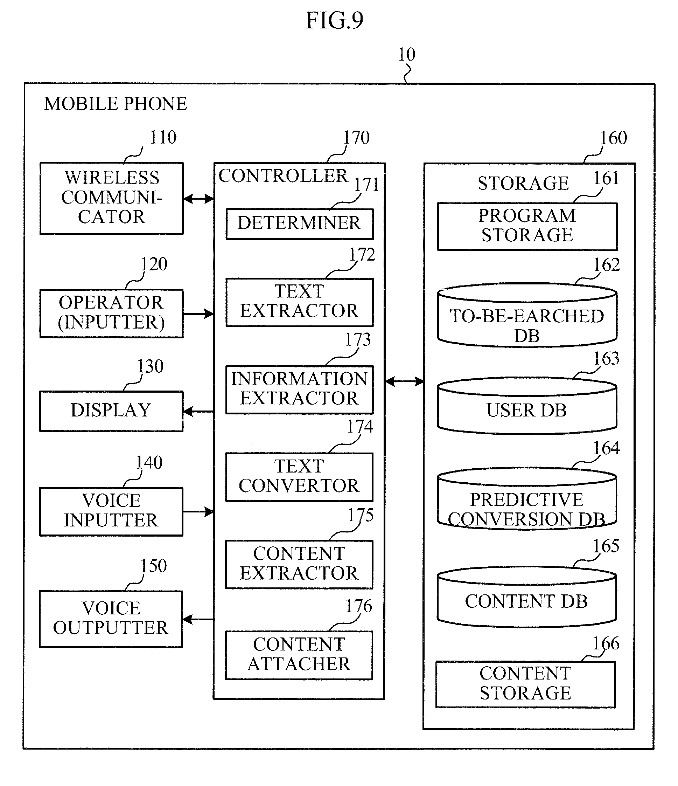

In the second embodiment, the mobile phone 10 including a text conversion device that allows for easy and simple attachment of a desired content to a mail body will be described. FIG. 9 is a block diagram illustrating a configuration of a mobile phone including the text conversion device according to the second embodiment of the present invention. It can be said that the text conversion device according to the second embodiment includes a content attachment device.

FIG. 9 is different from FIG. 1 on the followings. The storage 160 further includes a content database (hereinafter referred to as a content DB) 165 and a content storage 166. The controller 170 further includes a content extractor 175 and a content attacher 176 as functional components.

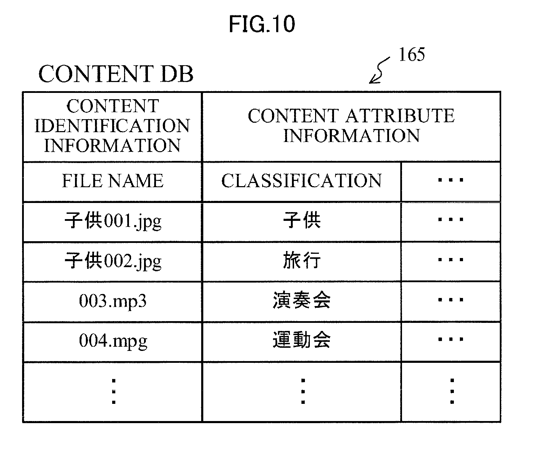

The content DB 165 stores content identification information that identifies a content and content attribute information that indicates a content attribute, in association with each other, as illustrated in FIG. 10.

The content identification information contains a content file name. The content attribute information contains classification information and the like. Table 15 is a supplementary explanation of contents of the content DB 165. In Table 15, values in "file name" field are called file names 1, 2, 3 ... from the top of the Table, and values in "classification" field are called classifications 1, 2, 3... from the top of the Table. In the classification field, for example, classifications 1, 2, 3 and 4 are *kanji* indicating a content regarding a child, a content regarding a travel, a content regarding a concert, and a content regarding a field day, respectively.

**[Table 15]**

| |
|---|
| File name 1 = 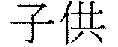 001.jpg; Note) " 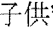 *" is *kanji* that means "child" and reads " 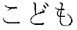 " in *hiragana* |
| Classification 1 = 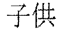 |
| File name 2 = 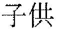 002.jpg |
| Classification 2 = 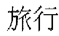 ; Note) " 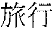 " is *kanji* that means "travel" and reads " 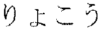 " in *hiragana* |
| File name 3 = 003.mp3 |
| Classification 3 = 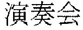 ; Note) " 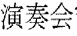 " is *kanji* that means "concert" and *reads "* 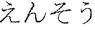 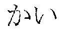 " in *hiragana* |
| File name 4 = 004.mpg |
| Classification 4 = 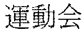 ; Note) " 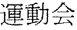 " is *kanji* that means "field day" and reads " 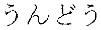 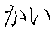 " in *hiragana* |

The content storage 166 stores a content such as an image file, a moving image file and/or the like.

The content extractor 175 and content attacher 175 will be described later.

The text conversion device according to the second embodiment includes the inputter 120, controller 170, and the storage 160 including the above various databases.

Hereinafter, for easier understanding, operation of the mobile phone 10 including the text conversion device according to the second embodiment, that is, the content attachment device, will be described where the content DB 165 stores data as illustrated in FIG. 10.

### (1) Processing to display a mail body input screen

When a user creates a new mail, the user operates the inputter 120 to provide an instruction to display a new mail creation screen, like the first embodiment.
The controller 170 displays a mail body input screen, like the first embodiment.

### (2) Processing to display a conversion candidate

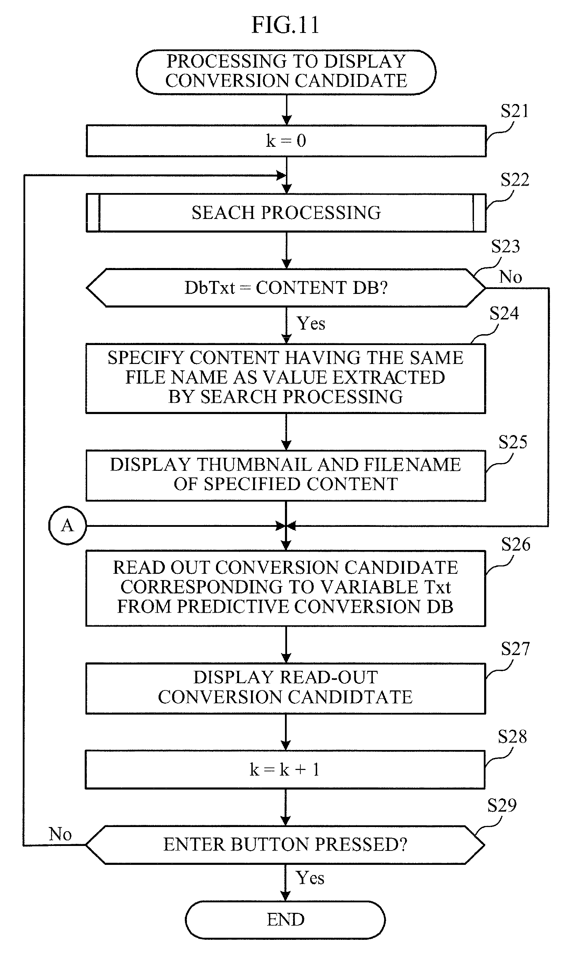

After the mail body input screen is displayed in this way, the controller 170 performs processing to display a conversion candidate of a text inputted by the inputter 120. The processing will be described with reference to FIG. 11.

Hereinafter, for easier understanding, processing to display a conversion candidate, by the controller 170, of a text inputted by the inputter 120 will be described where *hiragana* characters 7 to 13 in Table 16 are sequentially inputted from the inputter 120.

**[Table 16]**

| |
|---|
| *Hiragana* character 7 = 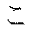 |
| *Hiragana* character 8 = 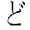 |
| *Hiragana* character 9 = 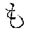 |
| *Hiragana* character 10 = 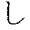 |
| *Hiragana* character 11 = 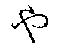 |
| *Hiragana* character 12 = 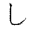 |
| *Hiragana* character 13 = 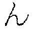 |

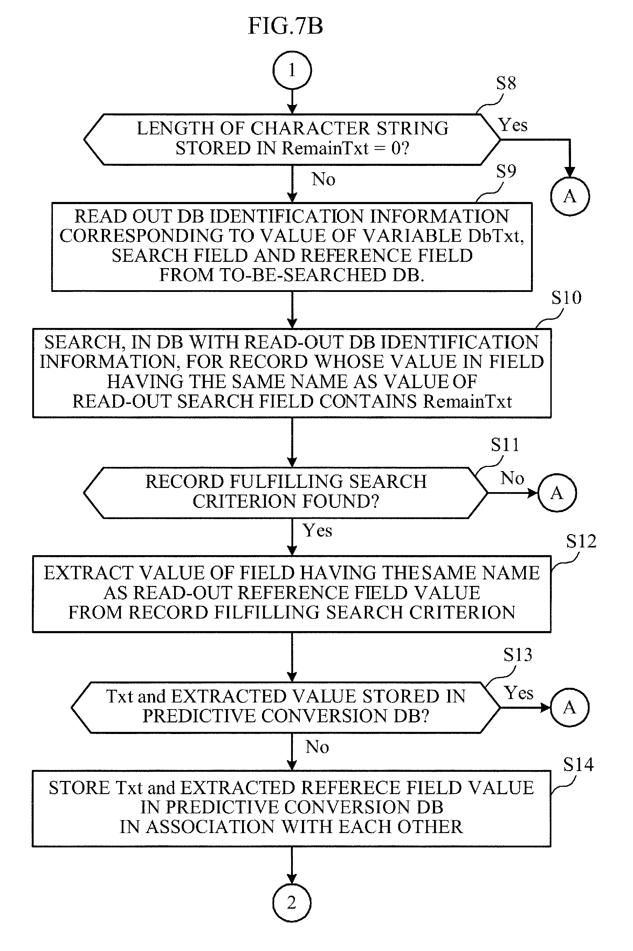

The controller 170, in response to displaying the mail body input screen, starts processing to display a conversion candidate illustrated in FIG. 11. The controller 170, first, resets a value of an index k to 0 (Step S21). Next, the controller 170 performs the same processing as processing of Steps S2 to S12 in the flow charts illustrated in FIGS. 7A and 7B (hereinafter, referred to as search processing) (Step S22).

Branches from Steps S5, S8 and S11 to Step S15 in the flow charts illustrated in FIGS. 7A and 7B are branches to Step S26 in FIG. 11, which are not illustrated in FIG. 11.

As a result of processing at Step S22, a variable Txt becomes a value in Table 17.

**[Table 17]**

| |
|---|
| Txt= 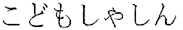 |

In the search processing, for example, since a value of the variable Txt in Table 17 contains a value shown in Table 18 in "text" field of the to-be-searched DB 162 in FIG. 2, a variable DbTxt and a variable RemainTxt are set to be a value in Table 19 and a value in Table 20, respectively.

**[Table 18]**

| |
|---|
| 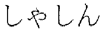 ; Note) see text 4 in Table 1 |

**[Table 19]**

| |
|---|
| DbTxt= 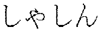 |

**[Table 20]**

| |
|---|
| RemainTxt= 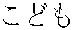 |

Since DB identification information corresponding to a value shown in Table 18 is "content DB" in the to-be-searched DB 162, the information extractor 173 searches the content DB 165 for a record whose value in "file name" field contains a value of a variable RemainTxt in Table 20, as with the first embodiment.

In this case, that a value of "file name" field contains a value of a variable RemainTxt includes a case where a value of "file name" field contains a value of a variable RemainTxt, as well as a case where a value of "file name" field contains a text having the same reading as that of a value of a variable RemainTxt. That is, for example, if a file name is a value shown in Table 21, it is determined that a value of "file name" field contains a value of a RemainTxt shown in Table 20.

**[Table 21]**

| |
|---|
| 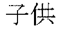 001.jpg; Note) " 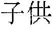 " is *kanji* and reads " 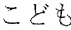 " in *hiragana.* |

The controller 170 determines whether a value of DB identification information of a portion corresponding to a variable DbTxt in a text in the to-be-searched DB 162 is "content DB" (Step S23). If the corresponding DB identification information is not "content DB" (Step S23; No), the controller 170 advances processing to Step S26.

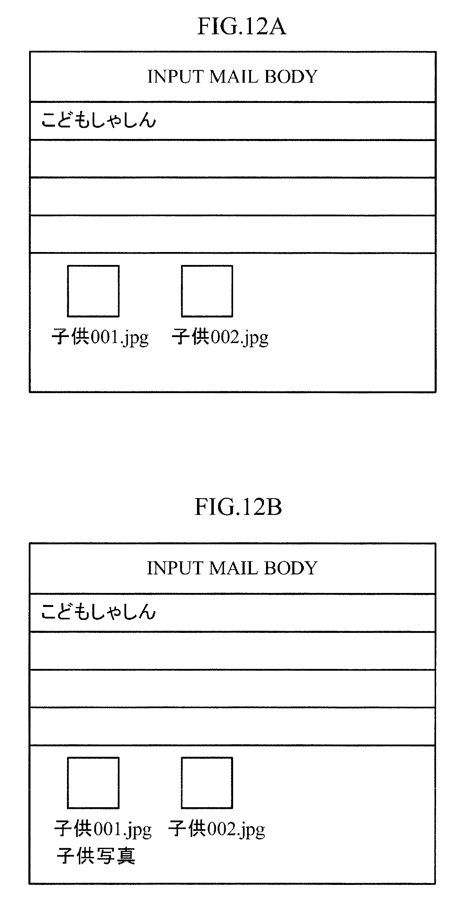

Meanwhile, if the DB identification information of a portion corresponding to a value of a variable DbTxt is "content DB" (Step S23; Yes), the content extractor 175 in the controller 170 specifies a content having the same file name as a value extracted by search processing from the content storage 166 (Step S24), and displays a thumbnail and a file name of the specified content, that is, information of the content, on the conversion candidate display, as illustrated in FIG. 12A (Step S25).

If the DB identification information is user DB, the text converter 174 in the controller 170 reads out a conversion candidate corresponding to the value of the variable Txt from the predictive conversion DB 164, as described in the first embodiment (Step S26). The text converter 174 displays the read-out conversion candidate on the conversion candidate display, as illustrated in FIG. 12B (Step S27). On the conversion candidate display in FIG. 12B, is displayed a case where a thumbnail and a file name of the content, as well as a conversion candidate as shown in Table 22 which was converted by the text converter 174 are extracted as options.

**[Table 22]**

| |
|---|
| 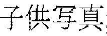 ; Note) *kanji* and reads " 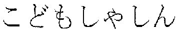 " in *hiragana* |

Next, the controller 170 increments a value of an index k (Step S28). The content attacher 176 determines whether the enter button has been pressed (Step S29). If the content attacher 176 determines that the enter button is not pressed (Step S29; No), processing returns to Step S22. Meanwhile, if it is determined that the enter button has been pressed (Step S29; Yes), the controller 170 terminates processing.

### (3) Processing to confirm a text

After a set of a thumbnail and a file name of the content as well as a conversion candidate are displayed on the conversion candidate display in this way, the controller 170 performs processing to convert a text (*hiragana*) inputted by the inputter 120 and confirm the inputted text as a user's desired content. The processing will be described.

The content attacher 176 in the controller 170 converts a variable Txt by selecting by the inputter 120 one set of a thumbnail and a file name from sets of a thumbnail and a file name displayed on the conversion candidate display and pressing the enter button. The content attacher 176, in response to pressing the enter button, attaches a content with the selected thumbnail and file name to a mail body.

Meanwhile, the content attacher 176 terminates processing without attaching a content with a displayed thumbnail and a file name to a mail body, in response to pressing the enter button without selecting one set of a thumbnail and a file name by the inputter 120 from sets of a thumbnail and a file name displayed on the conversion candidate display.

In response to selecting one conversion candidate by the inputter 120 from conversion candidates displayed on the conversion candidate display by processing described in the first embodiment and pressing the enter button, the text converter 174 converts the inputted text (*hiragana*) to the selected conversion candidate to be confirmed as a user's desired text.

Meanwhile, the text converter 174 confirms the inputted text (*hiragana*) as it is as a user's desired text without conversion, in response to pressing the enter button without selecting one conversion candidate by the inputter 120 from conversion candidates displayed on the conversion candidate display by processing described in the first embodiment. Such processing inputs a mail body on the mail body input screen, which has been described in the first embodiment.

As described above, according to the second embodiment, if an inputted text contains a word that specifies the content DB 165, the controller 170 extracts a remaining text by excluding this word from the inputted text. Then, the controller 170 extracts a file name of the content from the content DB 165 specified by this word with the use of a remaining text extracted by excluding this word from the inputted text as a search key, and displays set(s) of a thumbnail and a file name of the content with the extracted file name on the conversion candidate display.

Next, in response to selecting by the inputter 120 one set of a thumbnail and a file name from the set(s) of a thumbnail and a file name displayed on the conversion candidate display and pressing the enter button, the controller 170 attaches a content with the selected thumbnail and file name to a mail body. Such processing allows for easy attachment of a desired content to a mail body with less key operations than a conventional method, that is, easier and simpler attachment.

As described above, the second embodiment allows for easy and simple conversion from an inputted text to various information containing a content stored in a database.

The controller 170 displays a set of a thumbnail and a file name of a content, as well as a conversion candidate displayed by a predictive conversion function on the same conversion candidate display, which can provide a user interface with a high operation performance.

The text conversion device according to the second embodiment does not require a dedicated device either, and can be realized by installing a program and data for performing the respective processings described above to a common computer and executing the program on the operating system (OS). The program and data can be installed to the computer in such a way that the program and data is recorded on a computer-readable recording medium (such as a CD-ROM) and installed via this recording medium, or can be inputted and installed via a communication line or the like.

### (Third Embodiment)

In the second embodiment, the mobile phone 10 has been described that can search for a file name of a content stored in the content DB 165, extract a content with this file name with less key operations and attach the content to a mail. The present invention is not limited to this, and search for a file name does not necessarily require to use the content DB 165, but a file name can be searched for by directly referring to the content storage 166.

In a third embodiment, a mobile phone 10 will be described that can search a predetermined folder for a desired content without using the content DB 165 and attach a found content to a mail body.

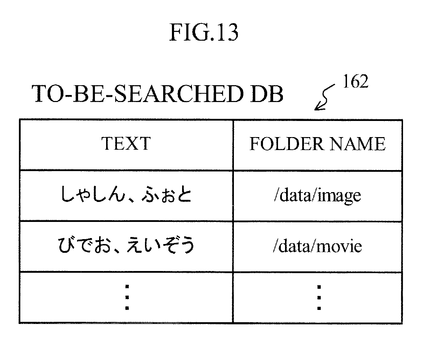

A configuration of the mobile phone 10 including the text conversion device according to the third embodiment is basically the same as that of the second embodiment, except for a configuration of the to-be-searched DB 162. The to-be-searched DB 162 according to the third embodiment stores a text, and a folder name of a folder storing a content, in association with each other, as illustrated in FIG. 13.

This folder is a folder created in the content storage 166, and a "/data/image" folder stores an image file and a "/data/movie" folder stores a moving image file. The to-be-searched DB 162 in FIG. 13 indicates a case whose objective is only attachment of a content. Where a case in the first embodiment is included, according to a value of a "text" field, there are a case where DB identification information contains user DB and a case where "DB identification information" field, search field and reference field are integrated into a "folder name" field as illustrated in FIG. 13.

Hereinafter, for easier understanding, the to-be-searched DBs 162 in FIGS. 2 and 13 are differentiated by a value of "text" field. That is, operation of the mobile phone 10 according to the third embodiment will be described where the data is stored as illustrated in FIG. 13, in the case where a value of DB identification information is "content DB" in the second embodiment.

### (1) Processing to display a mail body input screen

If a user intends to create a new mail, the user operates the inputter 120 to provide an instruction to display the new mail creation screen, as with the first embodiment.
The controller 170 displays the mail body input screen, as with the first embodiment.

### (2) Processing to display a conversion candidate

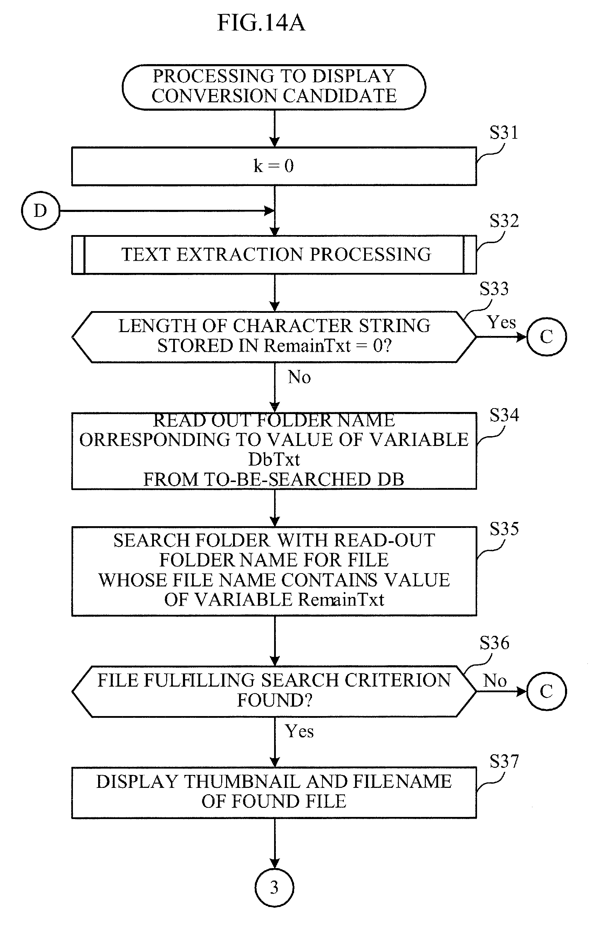

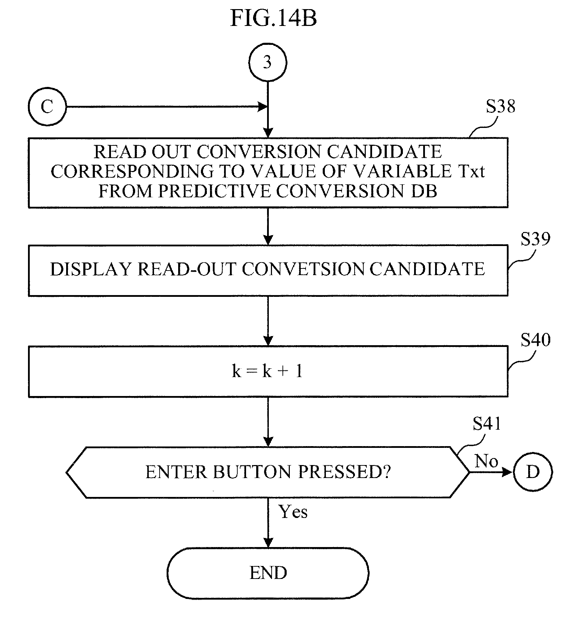

After the mail body input screen is displayed in this way, the controller 170 performs processing to display a conversion candidate of a text inputted by the inputer 120. The processing will be described with reference to FIGS. 14A and 14B.

Hereinafter, processing of the controller 170 to display a conversion candidate of a text inputted by the inputter 120 will be described where *hiragana* characters 14 to 19 shown in Table 23 are sequentially inputted by the inputter 120.

**[Table 23]**

| |
|---|
| *Hiragana* character 14 = 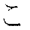 |
| *Hiragana* character 15 = 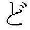 |
| *Hiragana* character 16 = 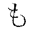 |
| *Hiragana* character 17 = 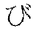 |
| *Hiragana* character 18 = 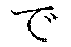 |
| *Hiragana* character 19 = 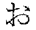 |

The controller 170, in response to displaying the mail body input screen, starts processing to display a conversion candidate illustrated in FIGS. 14A and 14B. First, the controller 170 resets a value of an index k to 0 (Step S31). Next, the controller 170 performs the same processing as processing of Steps S2 to S7 in the flow chart in FIG. 7A (hereinafter, referred to as text extraction processing), as with the first embodiment (Step S32). Step S15, which is a branch destination where a determination result of Step S5 in FIG. 7A is No, corresponds to Step S38 in FIG. 14B, which is not illustrated in FIGS. 14A and 14B.

The controller 170 determines whether a length (the number of bytes) of a character string stored in a variable RemainTxt is 0 (Step S33). If the controller 170 determines that a length (the number of bytes) of a character string stored in a variable RemainTxt is 0 (Step S33; Yes), the controller 170 advances processing to Step S38.

If the controller 170 determines that a length (the number of bytes) of a character string stored in a variable RemainTxt is not 0 (Step S33; No), the content extractor 175 reads out, from the to-be-searched DB 162 in FIG. 13, a value of a folder name corresponding to the same value of the "text" field as a value of a variable DbTxt (Step S34).

For example, if a variable DbTxt is a value shown in Table 24, the content extractor 175 searches the to-be-searched DB 162 illustrated in FIG. 13 for a value of a text having the same value as a value in Table 24; and if the value is found, reads out a value of a "folder name" field, "/data/movie" corresponding to this value of the text.

**[Table 24]**

| |
|---|
| DbTxt= 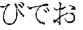 |

**[Table 25]**

| |
|---|
| 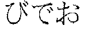 |

The content extractor 175 searches a folder with the same folder name as the read-out folder name for a file whose file name contains a value of a variable RemainTxt (Step S35).

For example, the content extractor 175 searches a folder "/data/movie" for a file whose file name contains a value of a variable RemainTxt in Table 26. In this case, containing a value of a variable RemainTxt includes a case of containing a value of a variable RemainTxt, as well as a case of containing a text having the same reading as a value of a variable RemainTxt. That is, if a file name is, for example, a value in Table 27, the file name is determined to include a value of a variable RemainTxt in Table 26.

**[Table 26]**

| |
|---|
| RemainTxt= 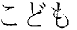 |

**[Table 27]**

| |
|---|
| 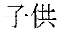 001.jpg; Note) " 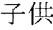 " is *kanji* and reads " 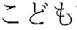 " in *hiragana.* |

Next, the content extractor 175 determines whether a file fulfilling such a search criterion has been found (Step S36).

If the content extractor 175 determines that a file fulfilling such a search criterion is not found (Step S36; No), the controller 170 advances processing to Step S38.

Meanwhile, if the content extractor 175 determines that a file fulfilling such a search criterion has been found (Step S36; Yes), the content extractor 175 displays a thumbnail and a file name of the found file on the conversion candidate display (Step S37).

The text converter 174 reads out a conversion candidate corresponding to a value of a variable Txt from the predictive conversion DB 164 (Step S38), and displays the read-out conversion candidate on the conversion candidate display (Step S39).

Next, the controller 170 increments a value of an index k (Step S40). The controller 170 determines whether the enter button has been pressed (Step S41). If the controller 170 determines that the enter button is not pressed (Step S41; No), the controller 170 returns processing to Step S32. Meanwhile, if the controller 170 determines that the enter button has been pressed (Step S41; Yes), the controller 170 terminates processing.

### (3) Processing to confirm a text

After a set(s) of a thumbnail and a file name of a content, as well as one or more conversion candidate are displayed on the conversion candidate display in this way, the text converter 174 and/or content attacher 176 convert a text (*hiragana*) inputted by the input 120, as with the second embodiment. If the conversion of a text confirms the content, the content attacher 176 attaches the confirmed content to a mail.

As described above, according to the third embodiment, if an inputted text contains a word specifying a folder as a database, the controller 170 extracts a remaining text obtained by excluding this word from the inputted text. Then, the controller 170 searches from a folder specified by this word for a content by the extracted remaining text as a search key, and displays set(s) of a thumbnail and a file name of the found content on the conversion candidate display.

Then, in response to selecting by the inputter 120 one set of a thumbnail and a file name from the set(s) of a thumbnail and a file name displayed on the conversion candidate display and pressing the enter button, the controller 170 confirms a content with the selected thumbnail and file name and attaches the content to a mail body, which allows for easy attachment of a desired content to the mail body.

As described above, according to the third embodiment, an inputted text can be easily and simply converted to various information containing a content stored in a database.

This invention is not limited to the matter described in the first to third embodiments, and various modifications and applications can be possible. For example, configurations of hardware and flow charts of operation of hardware described above are examples, and not limited to these, which can be properly modified and applied.

In the first and second embodiments, the user DB 163 stores information of a phone number, a mail address and an address, but each information can be stored in an individual database.

In the first to third embodiments, *hiragana* is inputted by the inputter 120 in the mail body input screen, but *katakana* or Roman characters may be inputted.

In the second embodiment, if a value of search field is "file name" and DB identification information is content DB in the to-be-searched DB 162, a value of "text" field in Table 28 and a value of search field, "file name" are stored in association with each other in the to-be-searched DB 162. Instead of this, if a value of search field is "classification" and DB identification information is content DB in the to-be-searched DB 162, a value of "text" field in Table 28 and a value of search field, "classification" may be stored in association with each other in the to-be-searched DB 162. In this case, the controller 170 searches the content DB at search processing in Step S22 for a record whose value in "classification" field contains a value of a variable RemainTxt in Table 26.

**[Table 28]**

| |
|---|
| 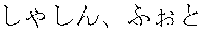 ; Note) see text 4 in Table 1 |

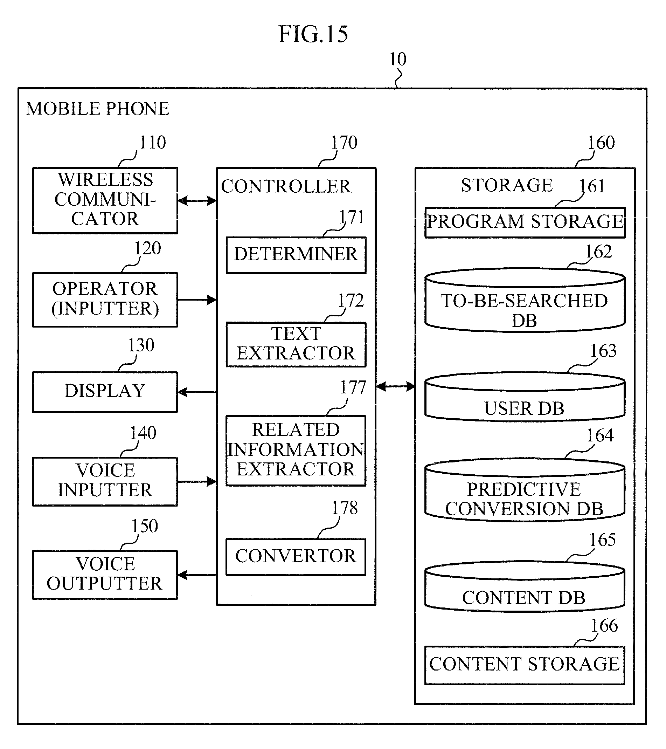

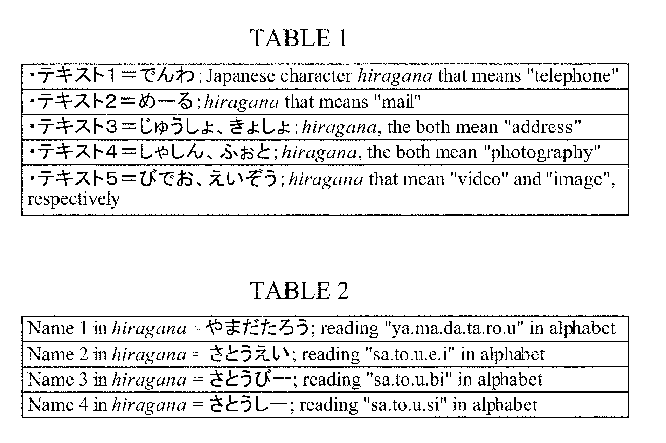

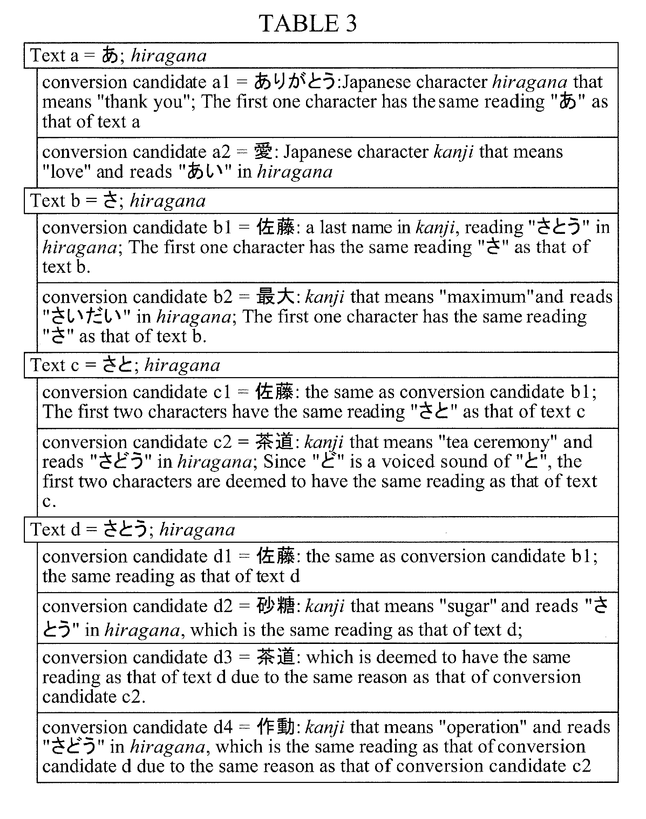

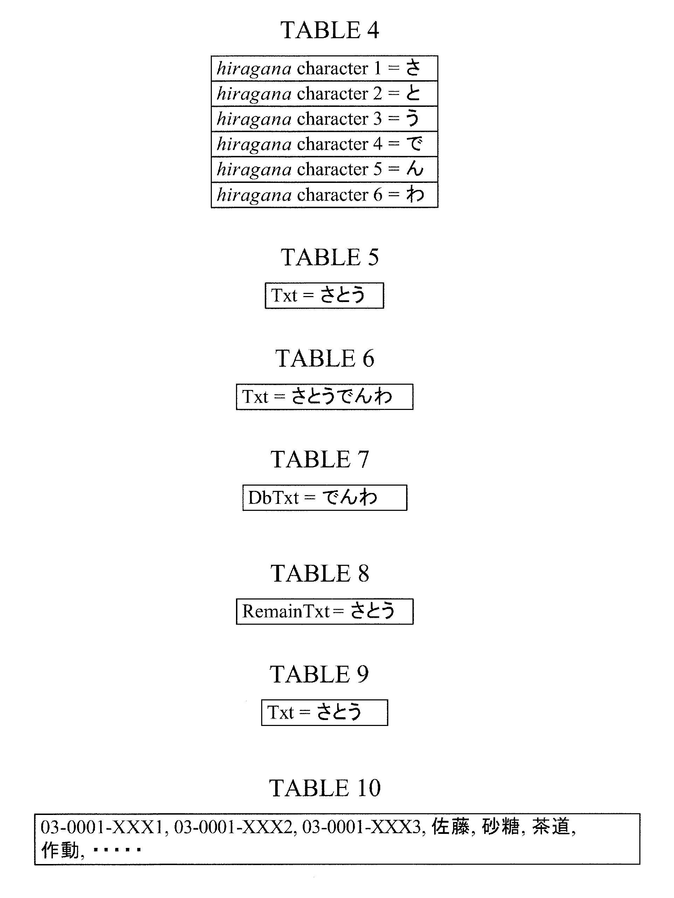

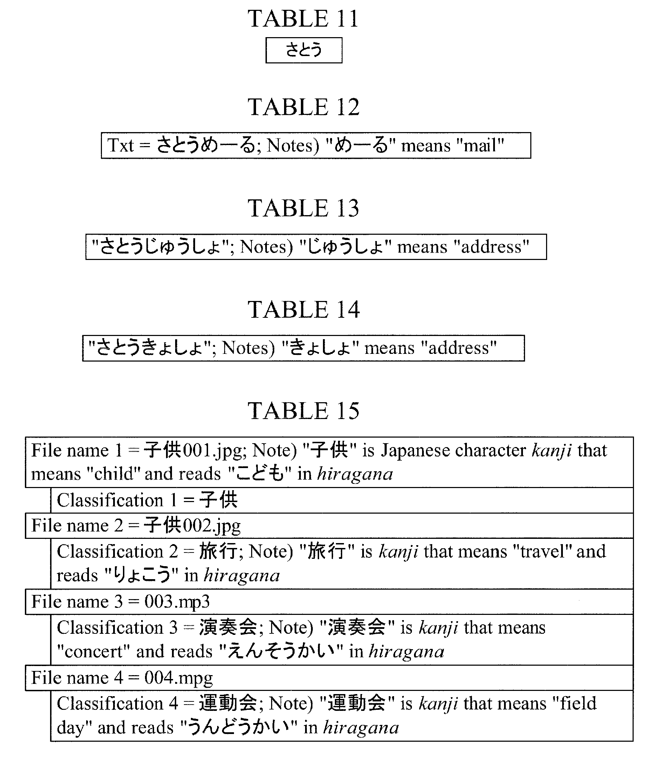

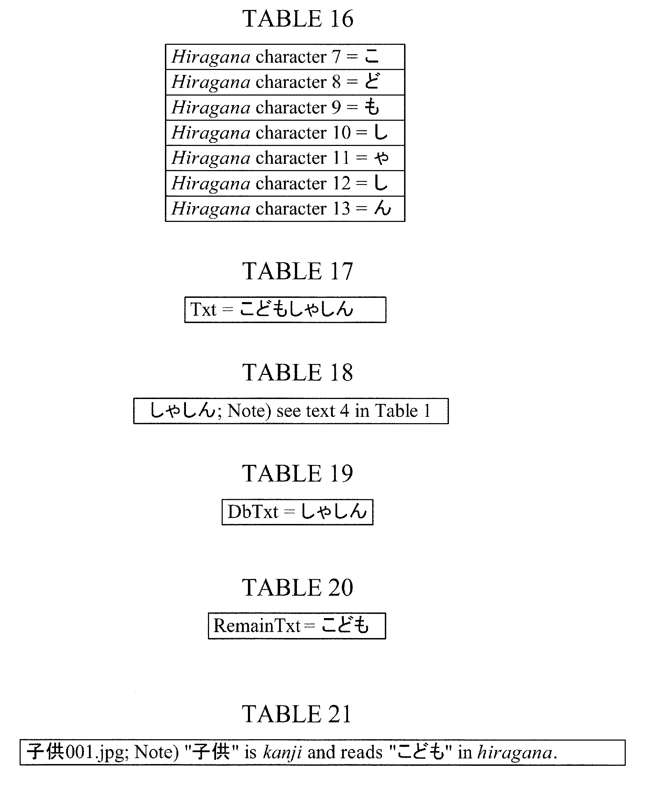

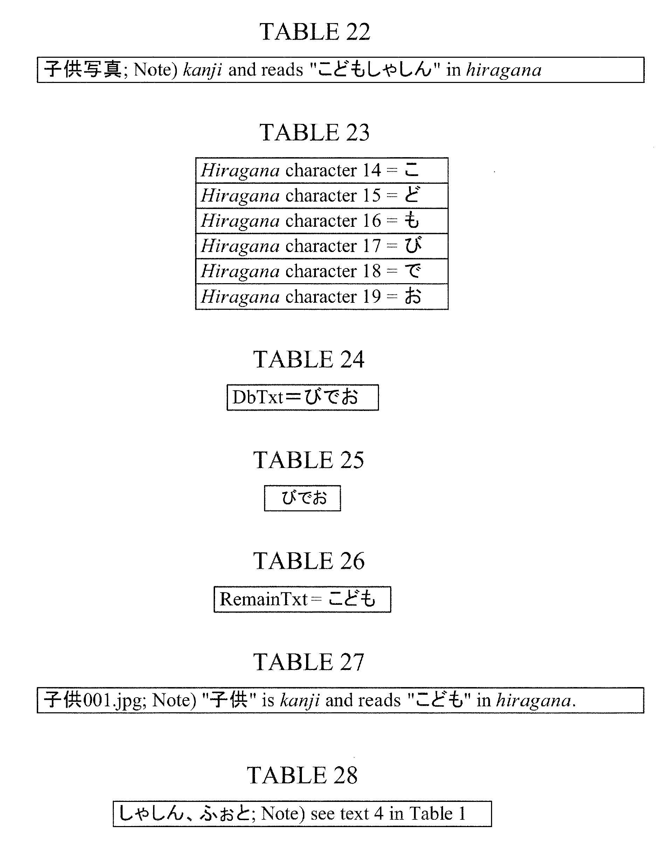

The text conversion device according to the first to third embodiments may be integrated as a configuration block diagram illustrated in FIG. 15. The configuration in FIG. 15 5 is different from the configuration in FIG. 9 in that the information extractor 173 and content extractor 175 are integrated into a related information extractor 177, and the text converter 174 and content attacher 176 are integrated into the converter 178.

The related information extractor 177 has a function of the information extractor 173 in the case where DB identification information is "user DB", and also has a function of the content extractor 175 in the case where DB identification information is "content DB". The case where the DB identification information is "content DB" includes a case where DB identification information is "content DB" and a case where a DB does not have DB identification information, as with the third embodiment. The both cases are common in that information is extracted, from a database specified by a word extracted by the text extractor, with the use of a remaining text obtained by excluding the word from a text as a search key, and are different in a database used for extraction. The controller 170 switches between both functions according to a value of DB identification information.

The converter 178 functions as the text converter 174 if DB identification information is "user DB", and functions as the content attacher 176 if DB identification information is "content DB".
Both of the text converter 174 and content attacher 176 are common in that they convert a text inputted by the inputter to either of information extracted by the information extractor 173 or the content extractor 175, that is, the related information extractor 177; and are different in that the text converter 174 may include a function of storing information to the predictive conversion DB whereas the content attacher 176 includes a function of attaching a corresponding "content" to a mail or the like on the basis of confirmed "content" information. The both functions are switched according to a value of DB identification information (including the presence or absence of a value).

The first to third embodiments have been described using Japanese as an example, but the first to third embodiments can be applied to other languages. For example, if the first to third embodiments are applied to English, changes are as follows. In the to-be-searched DB 162 illustrated in FIG. 2A, matters in "text" field are written in English alphabets; *"hiragana"* in "search field" becomes "alphabet". In the user DB 163 in FIG. 3, descriptions in "name" field are written in alphabet; and *"hiragana"* field becomes unnecessary. In the predictive conversion DB 164 in FIG. 4, descriptions in "text" field are written in alphabet, and a conversion candidate corresponding to this is a word or a segment that contains, as the first character, an alphabet written in "text" field, as well as a phone number, mail address, address and/or the like that are closely related to the alphabet written in "text" field and registered as a conversion candidate. In the content DB 165 in FIG. 10, "file name" field is, for example, a file name containing an alphabet, and "classification" field is, for example, a classification name containing an alphabet. In the case of a language, such as English, composed of only phonogram, an inputted phonogram does not need to be associated with ideogram. Therefore, the invention according to the first to third embodiments can be more easily and simply applied.

In any of the above variations, the same effects as described above can be exhibited.

Part or all of the above embodiments can be described as the following additional statements, but not limited to these.

### (Additional statement 1)

A text conversion device including:
a database configured to store information;
an inputter configured to input a text;
a determiner configured to determine whether a text inputted by the inputter contains a word specifying the database;
a text extractor that extracts the word and a remaining text without the word from the text, if the determiner determines that the text contains the word specifying the database;
a related information extractor configured to extract information from the database specified by the word extracted by the text extractor with the use of the remaining text as a search key; and
a converter configured to convert the text inputted by the inputter to any of the information extracted by the related information extractor.

### (Additional statement 2)

The text conversion device according to additional statement 1, wherein
the database includes a predictive conversion database that stores information extracted by the related information extractor as a conversion candidate of predictive conversion of a text inputted by the inputter, and
the related information extractor extracts the information from the predictive conversion database.

### (Additional statement 3)

The text conversion device according to additional statement 1 or 2, wherein
the database stores phone number information indicative of a phone number, and
the related information extractor extracts phone number information as the information from the database.

### (Additional statement 4)

The text conversion device according to additional statement 1 or 2, wherein
the database stores mail address information indicative of a mail address, and
the related information extractor extracts mail address information as the information from the database.

### (Additional statement 5)

The text conversion device according to additional statement 1 or 2, wherein
the database stores address information indicative of an address, and
the related information extractor extracts address information as the information from the database.

### (Additional statement 6)

The text conversion device according to any one of additional statements 1 to 5, wherein
the database includes a database that stores a content,
the related information extractor extracts content information as the information from the database that stores a content, and
the converter converts the inputted text to any of the extracted content information and attaches a content specified by the converted content information to a mail.

### (Additional statement 7)

A text conversion method performed by a text conversion device including a database that stores information, the method including:
an input step to input a text;
a determination step to determine whether the inputted text contains a word specifying the database;
a text extraction step to extract the word and a remaining text without the word from the text, if it is determined that the text contains the word specifying the database;
a related information extraction step to extract information from the database specified by the extracted word with the use of the remaining text as a search key; and
a conversion step to covert the inputted text to any of the information extracted at the related information extraction step.

### (Additional statement 8)

A computer-readable recording medium that has stored a program executable by a computer that controls a text conversion including a database that stores information, the program causing the computer to perform:
an input procedure to input a text;
a determination procedure to determine whether the inputted text contains a word specifying the database;
a text extraction procedure to extract the word and a remaining text without the word from the text, if it is determined that the text contains the word specifying the database;
a related information extraction procedure to extract information from the database specified by the extracted word with the use of the remaining text as a search key; and
a conversion procedure to convert the inputted text to any of the information extracted in the related information extraction procedure.

The present application claims priority based on Japanese Patent Application No. 2010-153647 filed on July 6, 2010. The entire specification, claims, drawings and abstract of Japanese Patent Application No. 2010-153647 are incorporated herein by reference.

### Industrial Applicability

This invention can be applied to a *kana-kanji* conversion system, a word processor and the like.

### Description of Reference Numerals

| | |
|---|---|
| 10 | Mobile phone |
| 110 | Wireless communicator |
| 120 | Operator (Inputter) |
| 130 | Display |
| 140 | Voice inputter |
| 150 | Voice outputter |
| 160 | Storage |
| 161 | Program storage |
| 162 | To-be-searched database(To-be-searched DB) |
| 163 | User database (User DB) |
| 164 | Predictive conversion database (Predictive conversion DB) |
| 165 | Content database (Content DB) |
| 166 | Content storage |
| 170 | Controller |
| 171 | Determiner |
| 172 | Text extractor |
| 173 | Information extractor |
| 174 | Text converter |
| 175 | Content extractor |
| 176 | Content attacher |
| 177 | Related information extractor |
| 178 | Converter |
| 401 | Text box for inputting a mail address |
| 402 | Text box for inputting a subject |
| 403 | Text box for specifying an attached file |
| 404 | Text area |

## Claims

1. A text conversion device comprising:
a database configured to store information
an inputter configured to input a text
a determiner configured to determine whether a text inputted by the input contains a word specifying the database;
a text extractor that extracts the word and a remaining text without the word from the text, if the determiner determines that the text contains the word specifying the database;
a related information extractor configured to extract information from the database specified by the word extracted by the text extractor with the use of the remaining text as a search key; and
a converter configured to convert the text inputted by the inputter to any of the information extracted by the information extractor.

2. The text conversion device according to claim 1, wherein
the database includes a predictive conversion database to store information extracted by the related information extractor as a conversion candidate of predictive conversion for the text inputted by the inputter, and
the related information extractor extracts the information from the predictive conversion database.

3. The text conversion device according to claim 1 or 2, wherein
the database stores phone number information indicative of a phone number; and
the related information extractor extracts the phone number information as the information from the database.

4. The text conversion device according to claim 1 or 2, wherein
the database stores mail address information indicative of a mail address; and
the related information extractor extracts the mail address information as the information from the database.

5. The text conversion device according to claim 1 or 2, wherein
the database stores address information indicative of an address, and
the related information extractor extracts the address information as the information from the database.

6. The text conversion device according to any one of claims 1 to 5, wherein
the database comprises a database that stores a content;
the related information extractor extracts content information as the information from the database that stores the content; and
the converter converts the inputted text to any of the extracted content information, and attaches a content specified by the converted content information to a mail.

7. A text conversion method performed by a text conversion device comprising a database that stores information, the method comprising:
an input step to input a text;
a determination step to determine whether the inputted text contains a word specifying the database;
a text extraction step to extract the word and a remaining text without the word from the text, if it is determined that the text contains the word specifying the database;
a related information extraction step to extract information from the database specified by the extracted word with the use of the remaining text as a search key; and
a conversion step to convert the inputted text to any of the information extracted at the related information extraction step.

8. A computer-readable recording medium that has stored a program executable by a computer that controls a text conversion device comprising a database that stores information, the program causing the computer to perform:
an input procedure to input a text;
a determination procedure to determine whether the inputted text contains a word specifying the database;
a text extraction procedure to extract the word and a remaining text without the word from the text, if it is determined that the text contains the word specifying the database;
a related information extraction procedure to extract information from the database specified by the extracted word with the use of the remaining text as a search key; and
a conversion procedure to convert the inputted text to any of the information extracted in the related information extraction procedure.
